# FASCICULE DE BREVET EUROPEEN

(11) **EP 2 716 163 B1**
(45) Date de publication et mention de la délivrance du brevet: **12.07.2017**
(21) Numéro de dépôt: 13186113.0
(22) Date de dépôt: 26.09.2013
(51) Int. Cl.: A23L 15/00, B65D 85/32, A23B 5/005

(54) **Oeuf dur présentant un prédécoupage de forme prédéfinie sur sa coquille, procédé de fabrication correspondant.**
Hart gekochtes Ei mit einer auf der Schale vorgezeichneten Vorschnittlinie, und entsprechendes Herstellungsverfahren
Hard-boiled egg having a presplit with a predetermined shape on the shell thereof, corresponding manufacturing method

(30) Priorité: 04.10.2012 FR 1259452
(43) Date de publication de la demande: 09.04.2014
(73) Titulaire: Ovoteam, 56500 Naizin (FR)
(72) Inventeur: Galet, Olivier, 22950 Trégueux (FR); Detre, Catherine, 22400 Lamballe (FR); Bianeis, Marine, 35800 Dinard (FR); Le Cabec, Xavier, 22800 Quintin (FR)
(74) Mandataire: Vidon Brevets & Stratégie

(56) Documents cités:
- FR-A1- 2 813 502
- GB-A- 2 307 394
- US-A- 3 131 846
- US-A- 3 257 062
- US-A- 5 939 118
- US-A- 6 086 931

## Description

### 1. Domaine de l'invention

Le domaine de l'invention est celui de produits transformés à base d'oeufs, destinés notamment, mais non exclusivement, au grand public, et distribués par exemple par les Grandes et Moyennes Surfaces.

### 2. Art antérieur et ses inconvénients

A ce jour, les oeufs sont principalement vendus au consommateur final sous forme d'oeufs coquilles (c'est-à-dire sous forme d'oeufs crus, dans leur coquille), qu'il est libre de transformer, à son domicile, pour en faire des omelettes, des oeufs coques, des oeufs à la neige, etc.

Cependant, il n'est pas possible à ce jour, pour le grand public, d'acheter des oeufs sous forme d'oeufs durs avec coquille, qui soient directement consommables pour un pique-nique, ou pour préparer un sandwich ou une salade par exemple, et qui soient également aisément transportables car protégés par leur coquille d'origine.

S'il souhaite consommer des oeufs durs, le consommateur doit acheter des oeufs coquilles, les faire cuire, les laisser refroidir, les écaler, avant de pouvoir les consommer. L'ensemble du processus est long, notamment du fait du temps de cuisson et de refroidissement de l'oeuf dur après cuisson, et nécessite l'accès à une cuisine, ou à tout le moins un point de cuisson. De plus, lorsque le consommateur procède lui-même à la cuisson des oeufs, il s'expose aux risques de sous-cuisson ou de sur-cuisson (selon la température initiale de l'oeuf, la température du bain de cuisson, le calibre de l'oeuf, ...) Il en résulte que les qualités organoleptiques de l'oeuf dur que le consommateur obtient ne sont pas toujours optimales.

Le document de brevet GB 2 307 394 décrit un procédé de fabrication d'oeufs durs, dont la coquille est fendue par chute de l'oeuf avant cuisson, pour faciliter son écalage avant conditionnement.

Les documents de brevet US 3 131 846, US 6 086 931 et US 3 257 062 présentent différents emballages permettant de conditionner des oeufs frais, pointe en bas. Le document de brevet US 5 939 118 décrit un procédé de pasteurisation des oeufs de poule.

Il existe donc un besoin d'une technique de production d'oeufs durs permettant d'offrir au grand public des oeufs durs encore protégés par leur coquille, qui soient directement et facilement consommables.

### 3. Exposé de l'invention

L'invention répond à ce besoin en proposant un oeuf dur présentant un prédécoupage de forme prédéfinie sur sa coquille, configuré de façon à permettre un retrait facilité de ladite coquille et conditionné avec sa coquille dans un emballage.

Ainsi, l'invention propose un tout nouveau concept de produit transformé à base d'oeuf, à savoir un oeuf dur encore protégé par sa coquille d'origine, que l'utilisateur va facilement et directement pouvoir consommer, même en situation de nomadisme, grâce notamment à un prédécoupage de forme prédéfinie de sa coquille, afin qu'il soit très facile d'écaler l'oeuf dur.

Un tel prédécoupage est par exemple réalisé au moyen d'un faisceau laser, par exemple de type CO₂ ou Nd:YAG, commandé de manière continue ou impulsionnelle. Un tel laser peut être réglé de façon à ne pas percer totalement la coquille de l'oeuf, mais seulement à l'affaiblir le long d'une ligne de rupture, ainsi que décrit par exemple dans le document de brevet FR2813502, qui décrit une technique d'ouverture d'oeufs crus après découpe laser de la coquille.

Un tel prédécoupage peut également être réalisé au moyen d'une lame circulaire, dont les paramètres de fonctionnement sont réglés de façon à ce que la lame scie la coquille de l'oeuf sur toute sa périphérie, mais de façon non traversante, de sorte que la coquille n'est pas totalement percée mais seulement affaiblie le long d'une ligne de rupture.

Selon une première caractéristique de l'invention, ledit prédécoupage définit un cercle ou une spirale sensiblement au niveau de l'équateur dudit oeuf.

Par équateur de l'oeuf, on entend la zone de l'oeuf présentant le plus grand diamètre lorsque l'oeuf est considéré en position verticale.

Le prédécoupage peut être réalisé sous forme d'une ligne pointillée ou continue, et définit alors un cercle, permettant de séparer la coquille de l'oeuf en deux parties qui, lorsqu'elles s'écartent, laissent totalement libre d'accès l'oeuf dur qu'elles contiennent.

Le prédécoupage peut également définir une spirale, et se présenter alors sous la forme d'une ligne ouverte sensiblement située dans la zone de l'équateur
de l'oeuf. Une telle forme de spirale est avantageuse en ce qu'elle induit une notion de mouvement, et incite ainsi le consommateur à "dévisser" l'oeuf pour le libérer de sa coquille.

En effet, selon une autre caractéristique de l'invention, ledit prédécoupage est réalisé de façon à ce que la coquille s'ouvre lorsqu'on dévisse l'oeuf de sensiblement un quart de tour.

Il est donc particulièrement facile d'écaler l'oeuf dur, en exerçant un simple mouvement de torsion sur sa coquille, qui va laisser s'écarter deux parties de coquilles, libérant ainsi l'oeuf dur. Ce mouvement de torsion est de préférence précédé d'un impact ou d'une pression exercée à proximité de la ligne de prédécoupage de la coquille, destinés à amorcer la rupture de cette dernière.

On s'affranchit alors de l'opération fastidieuse nécessaire pour écaler un oeuf dur "classique", qui nécessite, d'abord, de provoquer un ou plusieurs impacts sur la coquille, de façon à la fragmenter sur la totalité de sa surface, puis d'enlever chaque fragment de coquille l'un après l'autre. Cette opération peut être longue, et plus ou moins compliquée, en fonction de l'adhérence plus ou moins forte, tant de la membrane coquillère à la coquille, que du blanc d'oeuf dur à la membrane coquillère.

Selon l'invention, il suffit au contraire au consommateur de réaliser un mouvement tout à fait naturel, et nécessitant une force réduite, consistant à "dévisser" la coquille de l'oeuf: c'est simple, rapide et très efficace.

On peut bien sûr également envisager toutes autres formes de prédécoupage de la coquille, telles qu'un découpage en dents de scie, ou en vaguelettes, ou selon toute autre forme esthétique. On peut également envisager de réaliser un tel prédécoupage dans le sens de la hauteur de l'oeuf, de façon à obtenir deux parties de coquilles identiques, similaires à celles obtenues avec les oeufs en chocolat pour enfants de type Kinder (marque déposée).

On peut encore réaliser le prédécoupage de la coquille dans la zone supérieure de l'oeuf, à proximité de sa pointe, par exemple pour pouvoir décalotter l'oeuf dur.

Le prédécoupage peut également se présenter sous la forme d'une spirale parcourant la majeure partie de la coquille de l'oeuf, afin que cette dernière puisse être retirée sous forme de ruban, comme le serait la pelure d'une pomme par exemple.

L'invention concerne également le procédé de fabrication d'un tel oeuf dur, comprenant des étapes de:
- cuisson dudit oeuf;
- prédécoupage de la coquille dudit oeuf, formant un prédécoupage prédéfini permettant un retrait aisé de ladite coquille ;
- conditionnement dudit oeuf avec sa coquille dans un emballage.

Ainsi, et comme exposé précédemment, un tel procédé de fabrication permet d'offrir au consommateur un oeuf déjà cuit, sous forme d'oeuf dur protégé par sa coquille, facile à écaler, et à transporter avant consommation, grâce à son conditionnement dans un emballage. Un tel emballage permet également une présentation et une offre à la vente hygiénique et pratique, en magasin. Il peut contenir un ou plusieurs oeufs durs (par exemple quatre), selon que l'on propose une portion individuelle ou familiale.

On notera que les étapes de cuisson, prédécoupage et conditionnemment sont ici citées sans ordre chronologique de leur réalisation dans le cadre du procédé de l'invention. En effet, comme on le verra dans la suite, le prédécoupage de la coquille de l'oeuf peut être réalisé avant ou après cuisson, selon le mode de réalisation de l'invention envisagé.

Selon une première caractéristique de l'invention, un tel procédé comprend une étape de prérefroidissement rapide dudit oeuf après cuisson à une température inférieure à environ 70°C. Plus précisément, on opère un prérefroidissement de l'oeuf de façon à ce que sa température soit inférieure à 70°C en tout point du jaune d'oeuf. Pour un oeuf seul, en dehors de tout emballage, la température de l'oeuf passe ainsi d'environ 90°C à 70°C en approximativement dix minutes.

Un tel prérefroidissement rapide présente deux avantages principaux.

Tout d'abord, dans le cas où l'oeuf a été cuit en dehors de son emballage, son conditionnement à chaud (i.e. à une température de l'ordre de 85 à 90°C) peut s'avérer complexe: en effet, il faut pallier aux problèmes de rétractation de l'emballage lors de la phase de refroidissement de l'oeuf. Il est donc particulièrement intéressant de rapidement refroidir l'oeuf après cuisson, au moins jusqu'à 70°C en surface environ, avant de procéder à son conditionnement, ou directement après son conditionnement. Un tel prérefroidissement à 70°C en surface permet en outre d'éviter toute recontamination bactérienne.

Un autre avantage associé à ce prérefroidissement rapide est lié à l'esthétique de présentation de l'oeuf. En effet, la présence de fer dans le jaune de l'oeuf, de soufre dans le blanc et le jaune de l'oeuf, conjuguée à un pH basique du blanc d'oeuf (de l'ordre de pH=9), peut provoquer l'apparition, à la sur-cuisson, d'un liseré de couleur grise à la frontière entre le jaune d'oeuf et le blanc d'oeuf dur. Une cuisson de l'oeuf dans de bonnes conditions, associée à un refroidissement adéquat (permettant notamment d'abaisser rapidement la température en dessous de 70°C) évite, dans la plupart des cas, l'apparition d'un tel liseré.

Dans les cas où, malgré les précautions prises lors des étapes de cuisson et de refroidissement, certains oeufs présentent cependant un tel liseré, il peut être résorbé par un apport d'oxygène, obtenu en utilisant une atmosphère modifiée contenant de l'O₂. Il peut également être résorbé en agissant sur le pH de l'oeuf, de façon à le diminuer : dans ce cas, l'ajout d'un gaz comme le CO₂ est intéressant.

On peut également avantageusement combiner ces étapes de prérefroidissement rapide et d'apport d'atmosphère modifiée, par injection dans l'emballage d'oxygène (ou d'un mélange à base d'oxygène ou de CO₂) à basse température, qui va simultanément refroidir l'oeuf et résorber le liseré éventuel.

Le refroidissement de l'oeuf dur de 70°C environ à 4°C environ (température de conservation de l'oeuf) peut ensuite être plus lent, d'une durée approximative de 40 minutes au moins, tel que proposé par exemple dans l'article "Air-impingement cooling of boiled eggs: Analysis of flow visualization and heat transfer" de F. Erdogdu et al, Journal of Food Engineering 79 (2007) 920-928.

Selon un autre aspect de l'invention, un tel procédé de fabrication d'oeuf dur comprend une étape de légère congélation de surface dudit oeuf, après cuisson.

Un tel oeuf dur étant principalement destiné à une consommation "sur le pouce", en situation de nomadisme par exemple, ou lors d'un pique-nique, il est en effet particulièrement important qu'il présente de bonnes conditions d'écalabilité. Une telle étape de légère congélation de surface de l'oeuf le rendra effectivement plus facile à écaler. Il ne s'agit pas ici de réaliser une congélation totale de l'oeuf dur, qui entraînerait une structure de blanc d'oeuf en pelure d'oignon (sous forme de feuilles d'1 mm d'épaisseur environ), mais bien de réaliser une congélation de surface uniquement de la coquille et de la membrane coquillière, afin que le blanc se détache plus facilement de la coquille.

Une telle congélation de surface peut être obtenue en injectant dans l'emballage un gaz à une température environ égale à - 4°C. Plus généralement, après refroidissement de l'oeuf dans son emballage, on procède à un refroidissement en froid négatif le temps nécessaire pour obtenir une congélation de la coquille et de la membrane coquillière.

On notera qu'une telle étape de légère congélation de surface de l'oeuf après cuisson permet d'obtenir de bonnes conditions d'écalabilité de l'oeuf, et permet donc un retrait aisé de la coquille de l'oeuf, même en l'absence de prédécoupage prédéfini sur sa coquille. Un oeuf dur, dans sa coquille, ayant subi une telle étape de congélation de surface constitue donc une variante de réalisation permettant de résoudre le problème technique de l'invention, à savoir offrir à l'utilisateur un oeuf dur encore protégé par sa coquille d'origine, que l'utilisateur va facilement et directement pouvoir consommer, même en situation de nomadisme.

Une telle étape de légère congélation de surface de l'oeuf, après cuisson, peut donc avantageusement remplacer l'étape de prédécoupage de la coquille de l'oeuf dans le cadre du procédé de fabrication d'un oeuf dur de l'invention. Un tel procédé comprend donc, dans cette alternative, des étapes de cuisson, de légère congélation de surface, et de conditionnement de l'oeuf avec sa coquille dans un emballage (ces étapes sont ici listées sans ordre chronologique).

Dans une première variante de réalisation de l'invention, ladite étape de prédécoupage est effectuée après ladite étape de cuisson.

On réalise par exemple une découpe laser à chaud, sur l'oeuf déjà cuit. En variante, la découpe est réalisée au moyen d'une lame circulaire sciant partiellement la coquille. La découpe après cuisson permet d'éviter une éventuelle pollution de l'eau de cuisson des oeufs, ou de leur emballage (en cas de cuisson dans l'emballage), qui pourrait arriver en cas de rupture de la coquille d'un oeuf qui aurait été prédécoupée à cru.

On notera que, dans la variante de réalisation à base de laser, il est beaucoup plus difficile de réaliser un tel prédécoupage sur la coquille de l'oeuf déjà dur, l'oeuf cuit et chaud ayant une coquille beaucoup plus fragile que l'oeuf cru. En outre, le prédécoupage de la coquille sur l'oeuf déjà cuit présente des risques accrus par rapport à la découpe sur oeuf cru, liés à la manipulation de l'oeuf. Afin d'éviter toute dissipation d'énergie du laser, il convient par ailleurs de bien sécher la surface de l'oeuf avant de procéder à la découpe et ce, que l'oeuf soit cru ou cuit.

Dans cette première variante de réalisation, on cuit donc l'oeuf, puis on réalise le prédécoupage de sa coquille, avant de le conditionner, avec sa coquille, dans son emballage. On notera qu'il est aussi possible de commencer à conditionner l'oeuf dans son emballage avant le prédécoupage de sa coquille, par exemple en le disposant dans une boîte alvéolée, mais que l'emballage ne sera bien sûr fermé, ou scellé, qu'après réalisation complète du prédécoupage de la coquille. On évite ainsi de trop manipuler les oeufs durs après le prédécoupage, qui est susceptible de fragiliser la coquille.

Dans une deuxième variante de réalisation de l'invention, l'étape de conditionnement est effectuée avant l'étape de cuisson, et le procédé de fabrication selon l'invention comprend une étape de cuisson et de pasteurisation de l'oeuf à l'intérieur de l'emballage. Ladite étape de prédécoupage est donc effectuée avant ladite étape de cuisson.

Selon cette variante, le prédécoupage de la coquille de l'oeuf est donc réalisé sur l'oeuf coquille (donc cru), ce qui rend cette opération de découpe laser plus facile car elle est réalisée à froid, sur une coquille d'oeuf plus solide qu'après cuisson. En outre, en cas de panne ou de défaillance du système de prédécoupage, on peut prendre le temps d'identifier et de réparer la panne sans urgence, car les oeufs étant encore crus, la chaîne de fabrication n'est pas en flux tendu (dans le cas où le prédécoupage se fait sur oeuf cuit, au contraire, il est nécessaire d'intervenir très rapidement, pour que l'oeuf puisse ensuite être refroidi, puis conservé à froid).

Selon cette variante de réalisation, la cuisson, et donc la pasteurisation des oeufs, se font donc directement dans l'emballage, dans une enceinte fermée avec contrôle de pression. Les oeufs sont donc mieux protégés lors de la cuisson, grâce à l'emballage, ce qui permet de réduire le nombre d'oeufs qui éclatent à la cuisson, par rapport à la première variante de réalisation décrite ci-dessus.

On notera que le procédé de fabrication d'oeuf dur de l'invention, dans ses diverses variantes de réalisation, permet de détruire les spores de Clostridium botulinum, grâce notamment au maintien sur la surface de l'oeuf coquille d'une température de 90°C pendant 10 minutes ou équivalent. Une telle bactérie se développe et produit une toxine dangereuse en l'absence d'oxygène, il est donc particulièrement important que le procédé de l'invention permette de produire un oeuf dur ne présentant aucun risque de présence et recroissance de Clostridium botulinium. Une présence d'oxygène dans l'emballage constitue par ailleurs une garantie complémentaire.

L'oeuf dur est conditionné avec sa coquille dans un emballage qui
comprend au moins une alvéole destinée à recevoir l'oeuf pointe en bas, la forme de l'alvéole étant optimisée de façon à minimiser l'espace vide dans ledit emballage après introduction de l'oeuf.

Un tel emballage peut être utilisé quelle que soit la variante de réalisation du procédé de fabrication mise en oeuvre, mais ses caractéristiques sont tout particulièrement avantageuses dans le contexte de la deuxième variante de réalisation, selon laquelle l'oeuf, dont la coquille a été préalablement prédécoupée à cru, est cuit et pasteurisé directement dans l'emballage.

Tout d'abord, l'emballage est conçu de façon à ce que les oeufs soient, de préférence, disposés pointes en bas dans les alvéoles, pour des raisons mécaniques liées au processus industriel de mise en oeuvre de l'invention.

En outre, un tel emballage est optimisé afin d'améliorer les échanges thermiques. Pour ce faire, il est conçu de façon à réduire autant que possible l'espace vide dans l'emballage après introduction du ou des oeufs: notamment, dans le cas où l'emballage contient plusieurs oeufs, les alvéoles sont conçues de façon à ce qu'il y ait le moins d'espace vide possible entre les coquilles des oeufs. Plus précisément, les alvéoles sont conçues de façon à ce que, en fonction du calibre des oeufs, chaque coquille d'oeuf repose bien au fond de l'alvéole, et que la hauteur de l'alvéole corresponde bien à la hauteur de l'oeuf, afin que la partie supérieure de la coquille de l'oeuf soit à proximité de l'opercule de fermeture de l'emballage. L'alvéole intérieure doit donc être assez large pour permettre à l'oeuf de "descendre" jusqu'au fond de l'alvéole.

Un tel emballage est réalisé en matériau plastique sensiblement transparent ou translucide, par exemple en polypropylène copolymère thermoformé, supportant un traitement thermique par exemple à 95°C, sans déformation.

Ainsi, si un oeuf éclate à la cuisson, cela peut-être constaté visuellement, au travers de l'emballage transparent ou translucide, de façon à écarter l'oeuf de la chaîne de commercialisation.

L'invention concerne également un oeuf dur, un procédé de fabrication d'un tel oeuf, et un emballage présentant en combinaison tout ou partie des caractéristiques exposées dans l'ensemble de ce document.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- les figures 1A et 1B illustrent des oeufs durs présentant un prédécoupage prédéfini de leur coquille, l'un en forme de cercle, et l'autre en forme de spirale, conformément à l'invention ;
- les figures 2A, 2B et 2C présentent trois variantes de prédécoupage de la coquille des oeufs durs des figures 1A et 1B ;
- la figure 3 illustre sous forme d'organigramme les différentes étapes du procédé de fabrication d'oeuf dur de l'invention, dans un premier mode de réalisation ;
- la figure 4 présente un organigramme du procédé de fabrication de la figure 3, dans un deuxième mode de réalisation ;
- les figures 5A et 5B illustrent un emballage d'oeuf dur utilisé dans le cadre du procédé de fabrication de la figure 4.

### 5. Description détaillée de modes de réalisation de l'invention

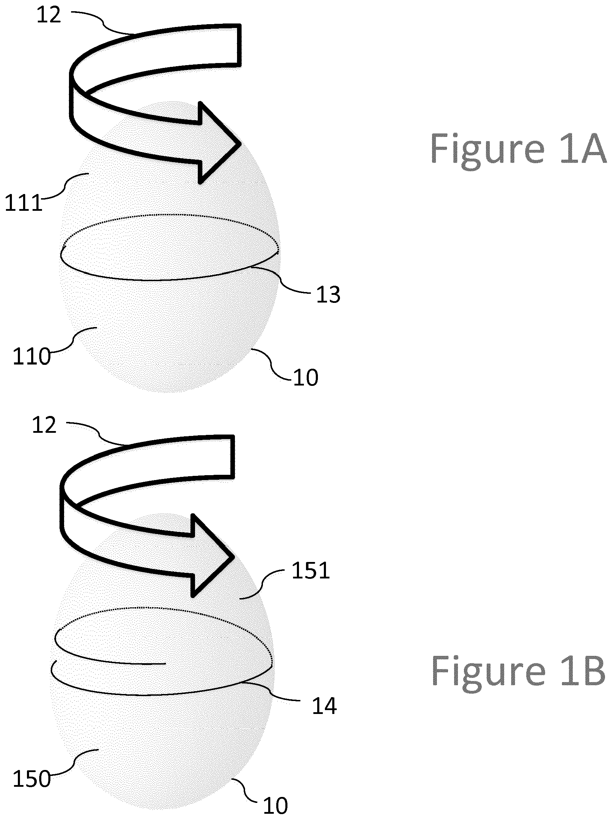

On présente désormais, en relation avec les figures 1A et 1B, deux exemples d'oeufs durs 10 présentant un prédécoupage de forme prédéfinie de leur coquille, conformément à l'invention. Un tel prédécoupage est destiné à permettre un retrait aisé de la coquille de l'oeuf. Ainsi qu'illustré sur ces figures, un tel retrait s'opère par simple mouvement de torsion de la coquille, que le consommateur "dévisse", comme représenté schématiquement par les flèches 12.

Sur l'oeuf dur 10 de la figure 1A, le prédécoupage de la coquille définit un cercle 13, sensiblement situé au niveau de l'équateur de l'oeuf, i.e. dans la zone de l'oeuf présentant le diamètre le plus important lorsque l'oeuf est considéré dans sa position verticale.

Lorsque le consommateur "dévisse" l'oeuf 10, selon le mouvement schématisé par la flèche 12, les deux parties 110 et 111 de la coquille se séparent selon la ligne de prédécoupage 13, libérant ainsi l'oeuf dur dans sa totalité. En effet, le cercle 13 ayant été réalisé au niveau de l'équateur de l'oeuf, aucune partie de l'oeuf dur 10 ne reste coincé dans la coquille.

Sur la figure 1B, le cercle 13 a été remplacé par une spirale 14, également située au niveau de l'équateur de l'oeuf 10. L'ouverture de la coquille en deux parties 150 et 151 se fait alors selon une découpe moins nette, mais libère néanmoins l'ensemble de l'oeuf dur de la même manière. En outre, cette forme en spirale du prédécoupage 14 de la coquille incite naturellement le consommateur à "dévisser" l'oeuf dur 10 pour l'ouvrir, comme schématisé par la flèche 12.

Un tel prédécoupage 13, 14 de la coquille de l'oeuf se fait par exemple selon la technique décrite dans le document de brevet FR2813502, en entaillant la coquille avec un faisceau laser, par exemple de type CO₂ ou Nd:YAG, pour former une amorce de rupture. Ainsi, de préférence, une telle amorce de rupture ne traverse pas totalement la coquille de l'oeuf, et est par exemple réalisée par commande impulsionnelle du faisceau laser, de sorte que le prédécoupage 13, 14 est fait en pointillés sur la coquille.

De tels pointillés, très rapprochés, ne sont généralement pas visibles à l'oeil nu pour le consommateur, qui voit un trait blanc continu, ainsi qu'illustré sur les figures 1A et 1B.

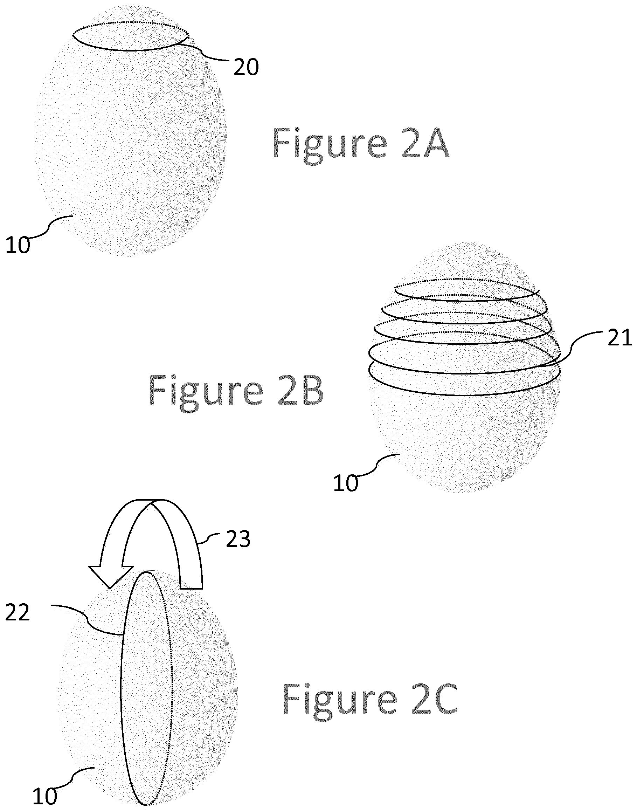

D'autres formes de prédécoupage peuvent également être envisagées, ainsi qu'illustré par les figures 2A à 2C. Il est cependant préférable que ces prédécoupages soient esthétiques, c'est-à-dire réguliers et visibles par l'utilisateur. Ainsi, à titre d'exemple, les figures 2A à 2C présentent respectivement :
- un oeuf dur 10 présentant un prédécoupage 20 en forme de cercle situé dans la partie supérieure de l'oeuf 10, permettant de décalotter une partie de la coquille ;
- un oeuf dur 10 présentant un prédécoupage 21 en forme de spirale, prenant naissance au niveau de l'équateur de l'oeuf 10, et se poursuivant jusqu'à la partie supérieure de l'oeuf. Une telle forme permet d'éplucher l'oeuf, comme on pourrait le faire avec la pelure d'une pomme ;
- un oeuf dur 10 présentant un prédécoupage 22 sous forme de ligne périphérique dans la hauteur de l'oeuf. Le mouvement à appliquer pour séparer les deux parties de la coquille est alors différent de celui des figures 1A et 1B, comme illustré par la flèche référencée 23.

On peut encore envisager toute autre forme de prédécoupage prédéfini, telle qu'un découpage en dents de scie par exemple.

Comme évoqué précédemment, un tel prédécoupage peut également être réalisé au moyen d'une lame circulaire, plutôt que par laser, notamment lorsque le prédécoupage est réalisé sur l'oeuf déjà cuit.

On notera que, pour assurer que la découpe de la coquille soit esthétique, il est important que l'oeuf soit bien tenu lors de cette phase de prédécoupage. A cet effet, plusieurs techniques peuvent être envisagées dans le cadre des différents modes de réalisation de l'invention, à savoir par exemple:
- l'oeuf peut être posé sur des diabolos, avec un profil qui bloque l'oeuf pendant sa rotation, comme décrit par exemple dans le document de brevet FR2813502 ;
- l'oeuf peut être mis en rotation par au moins trois pieds sur lesquels il est posé, selon la technique développée par exemple par EBM Bergmeier GmbH & Co. KG (marque déposée) ;
- l'oeuf peut encore être tenu par deux ventouses opposées qui le maintiennent tout en le mettant en rotation.

Toute autre méthode permettant d'assurer un bon maintien de l'oeuf pendant la phase de prédécoupage peut également être utilisée dans le cadre de l'invention, dès lors qu'un tel maintien est suffisant pour permettre d'obtenir une découpe esthétique, ou à tout le moins régulière, de la coquille.

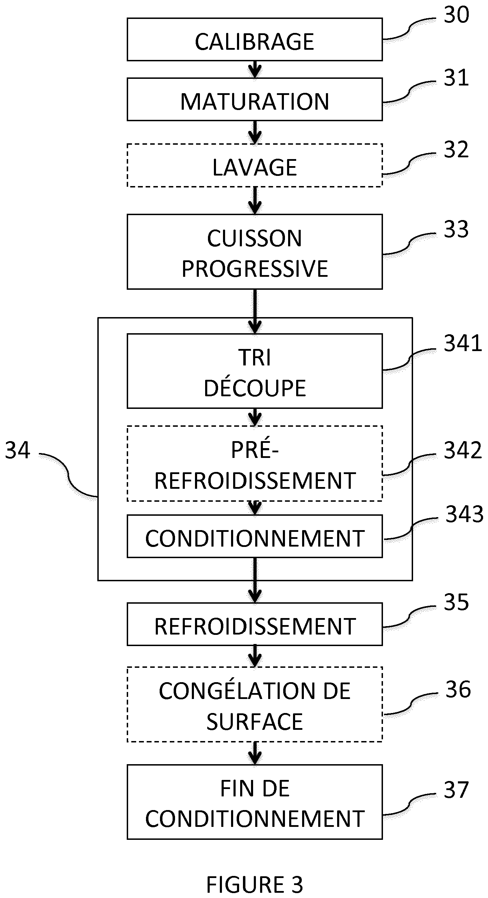

On présente désormais en relation avec la figure 3, un premier mode de réalisation du procédé de fabrication des oeufs durs 10 des figures 1 et 2.

Les produits de départ sont des oeufs coquilles, reçus par exemple sur des plateaux d'alvéoles en provenance d'une exploitation agricole. Au cours d'une première étape de calibrage référencée 30, les oeufs sont pesés de façon à ne conserver que, par exemple, les oeufs de 62 g, à plus ou moins 2 g près. Au cours de cette étape de calibrage 30, on opère également une sélection des oeufs, de manière à écarter les oeufs sales, fêlés ou difformes. On notera que l'homogénéité du calibre des oeufs permet d'optimiser les qualités organoleptiques, notamment du jaune d'oeuf, en évitant des problèmes de sous-ou sur-cuisson.

Au cours d'une étape de maturation référencée 31, les oeufs sélectionnés sont ensuite portés à maturation, pendant une durée d'environ 15 jours, à une température de 15 à 20°C. En effet, la maturité de l'oeuf influence son écalabilité, car, sur un oeuf à maturation, la membrane coquillère adhère mieux à la coquille, ce qui facilite ensuite l'écalage de l'oeuf après cuisson.

On notera qu'un choix pertinent d'oeufs, en amont du procédé de fabrication d'oeufs durs en lui-même, influence fortement les propriétés d'écalabilité de l'oeuf dur obtenu : en effet, un choix de date de ponte bien précis, ainsi que la maîtrise du temps de maturation de l'oeuf coquille avant son utilisation, permettent d'obtenir une plus forte adhérence de la membrane coquillère à la coquille.

Lorsque les oeufs arrivent à maturation, ils peuvent subir une étape optionnelle de lavage 32 (caractère optionnel représenté sous forme de traits pointillés sur la figure 3), à une température d'environ 40 à 50°C, à l'aide d'eau, de brosses, de soude alimentaire, et éventuellement d'agents de lavage autorisés. Un tel lavage des oeufs réduit a priori les flores d'altération. Il peut être par exemple réalisé selon la technique décrite dans le document « Washing table eggs: a review of the scientific and engineering issues » de M.L. HUTCHISON et al., World's Poultry Science Journal, Vol. 59, June 2003, p. 233 et suivantes.

Les oeufs subissent ensuite une étape 33 de cuisson progressive: pour ce faire, on réalise une dépose "douce" des oeufs dans un cuiseur eau chaude alimentaire (i.e. les oeufs sont isolés les uns des autres dans une alvéole ou un panier, et ne sont pas cuits en vrac), dans lequel les oeufs sont maintenus pendant quinze minutes environ à une température de 95°C environ. Au cours de cette étape, le chauffage progressif de l'oeuf permet de limiter au maximum les fêlures, en facilitant l'évacuation de l'air chaud contenu dans la coquille par les pores de l'oeuf. Un tel chauffage progressif est obtenu par exemple en immergeant les oeufs pendant quelques minutes dans un premier bain à 85°C, avant de les tremper dans un bain de cuisson plus chaud à 95°C. Les oeufs cuits sont ensuite extraits du cuiseur.

Au cours d'une phase référencée 34, les oeufs cuits subissent divers traitements dont seuls les principaux ont été illustrés en figure 3:
- au cours d'une étape référencée 341, on opère un tri des oeufs, fondé sur l'intégrité de leur coquille, de façon à écarter les oeufs qui se seraient fêlés ou auraient éclaté au cours de la cuisson 33. Un tel tri peut être opéré manuellement, par observation des oeufs par un opérateur, ou peut être automatisé, au moyen d'un système de traitement d'image par exemple. On opère également une découpe (au laser, ou au moyen d'une lame circulaire par exemple) de la coquille des oeufs conservés, de façon à définir un prédécoupage qui permettra ultérieurement à l'utilisateur d'écaler l'oeuf facilement. Une telle découpe de la coquille se fait donc à chaud, sur l'oeuf en sortie du cuiseur alimentaire, ce qui rend cette opération particulièrement complexe, du fait de la fragilité de la coquille de l'oeuf après cuisson.
- une étape optionnelle 342 de prérefroidissement rapide de l'oeuf dont la coquille a ainsi été prédécoupée, visant à abaisser rapidement la température de l'oeuf de 85-90°C à une température de 70°C environ en tout point de l'oeuf, peut ensuite être mise en oeuvre. Un tel prérefroidissement rapide facilite en effet l'étape ultérieure 343 de conditionnement des oeufs, car elle permet d'éviter le phénomène de rétractation de l'emballage qui se produit lors du conditionnement à chaud. Un tel prérefroidissement 342 à 70°C permet également d'éviter l'apparition permanente d'un liseré gris, à la frontière entre le jaune et le blanc de l'oeuf, et se prolonge de préférence jusqu'à l'obtention d'une température de 70°C en tout point du jaune. Par ailleurs, cette température reste suffisante pour éviter des contaminations microbiennes. Cette étape optionnelle 342 doit être effectuée dans une ambiance particulièrement soignée évitant les recontaminations microbiennes, par exemple dans une salle en légère surpression et dont l'air est filtré pour éviter toute pollution microbienne des oeufs au cours du conditionnement.
Sans que cela soit illustré sur la figure 3, les oeufs peuvent subir un marquage, en apposant un autocollant sur leur coquille ou en utilisant de l'encre alimentaire, ce qui permettra par exemple de distinguer ces oeufs durs d'oeufs crus, dans le réfrigérateur du consommateur.
- au cours d'une étape 343, les oeufs sont ensuite conditionnés, avec leurs coquilles, dans un emballage façon « boîte à oeufs », pouvant contenir un ou plusieurs oeufs (par exemple quatre), en plastique thermoformé, et fermé de façon hermétique par thermo-scellage. Cette étape de conditionnement 343 est de préférence réalisée sous atmosphère modifiée avec légère surpression (opération qui consiste à injecter davantage d'air dans l'emballage, de façon à anticiper sur la rétractation qui sera provoquée par son refroidissement). Une telle atmosphère modifiée peut consister à enrichir l'air d'O₂, de CO₂ ou d'un mélange d'O₂ et de CO₂, de façon à réduire le phénomène d'apparition du liseré gris, et bien sûr à participer à la bonne conservation du produit tout au long de sa durée de vie. La boîte d'oeufs est fermée par un film transparent résistant à la pasteurisation (par exemple en polypropylène homopolymère, ou copolymère, ou leur mélange).
Lorsque l'étape optionnelle 342 de prérefroidissement n'est pas mise en oeuvre, les oeufs sont donc conditionnés quelques secondes à quelques minutes après leur sortie du bain de cuisson.

Au cours d'une étape référencée 35, les oeufs sont ensuite refroidis dans leur emballage jusqu'à atteindre leur température de conservation, de l'ordre de 0 à 4°C environ. Ce refroidissement peut se faire en continu, sur l'ensemble des oeufs produits se déplaçant sur un convoyeur dans la zone de refroidissement, ou se faire par lots (mode "batch").

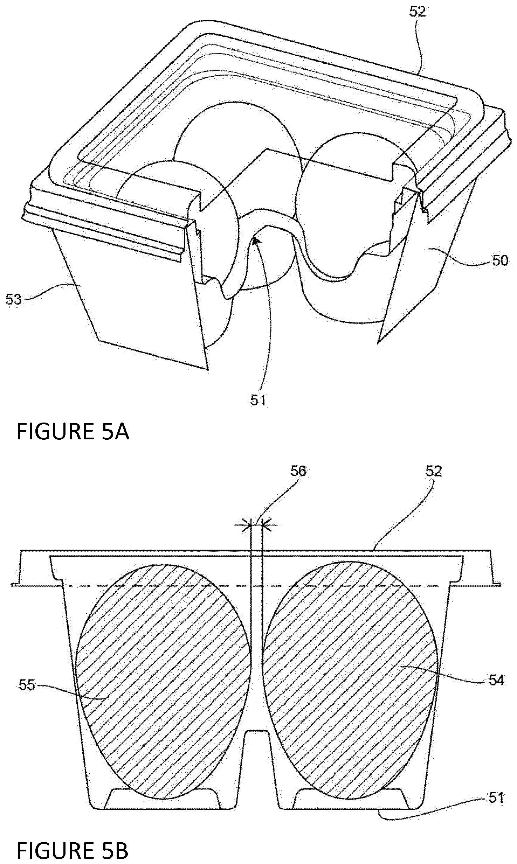

Au cours de cette étape de refroidissement 35, les phénomènes de gonflement/rétractation de l'emballage dus aux changements de température doivent être maîtrisés, grâce à une dynamique de refroidissement appropriée et/ou grâce aux propriétés de l'emballage qui seront détaillées dans la suite de ce document en relation avec les figures 5A et 5B.

On notera par ailleurs que la qualité organoleptique de l'oeuf dur (liseré, couleur et texture du jaune) dépend de la vitesse de refroidissement, à laquelle il convient donc de veiller, ainsi que du calibre de l'oeuf.

La durée de cette étape de refroidissement doit être adaptée, en fonction des caractéristiques de l'emballage utilisé.

A titre optionnel, à l'issue de cette étape 35 de refroidissement, on peut procéder à une légère congélation de surface de l'oeuf (étape référencée 36), afin de faciliter ensuite son écalabilité.

Au cours d'une dernière étape référencée 37, on termine ensuite le conditionnement des boîtes d'oeufs durs, en y apposant un couvercle, ainsi que, le cas échéant, une étiquette mentionnant diverses caractéristiques des oeufs (date limite de consommation, marque, provenance, ...). La boîte d'oeufs ainsi refermée peut également être glissée dans un fourreau en carton, et/ou conditionnée en plateaux.

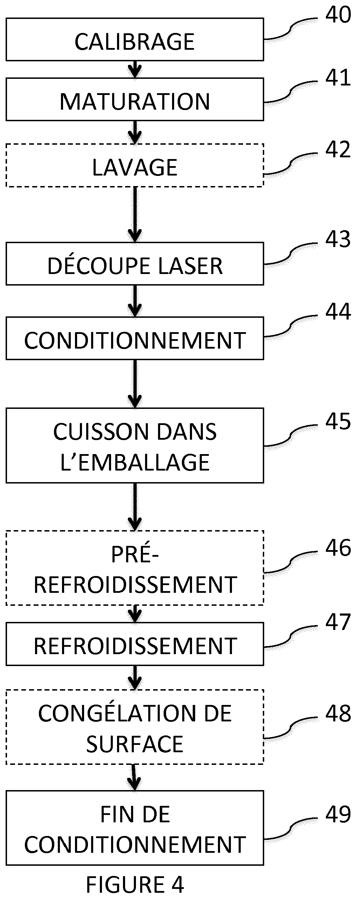

On décrit désormais, en relation avec la figure 4, une variante de réalisation du procédé de fabrication de la figure 3, dans laquelle les oeufs sont cuits et pasteurisés directement dans l'emballage.

Comme dans le processus de la figure 3, les oeufs sont tout d'abord calibrés (40), afin de ne conserver par exemple que les oeufs de 62 g +/- 2g, et d'écarter les oeufs sales, fêlés ou difformes. Les oeufs sont ensuite portés à maturation (41) pendant environ 15 jours, à une température de 15 à 20°C.

Au cours d'une étape référencée 42, les oeufs sont ensuite de préférence lavés, selon une technique similaire à celle décrite en relation avec la figure 3.

On procède ensuite au prédécoupage laser 43 de la coquille des oeufs, afin de créer une amorce de rupture qui facilitera l'ouverture de l'oeuf après cuisson. On notera ici que ce prédécoupage ne doit pas traverser la coquille de part en part, puisqu'il intervient avant la cuisson de l'oeuf, et n'a donc pour but que de fragiliser la coquille par endroits, afin d'en faciliter son retrait ultérieur. Une rupture totale de la coquille serait en effet susceptible de polluer l'intérieur de l'emballage.

Un tel prédécoupage peut être réalisé au moyen d'un laser CO₂ à impulsions de 150W, à une fréquence de travail de 2 kHz, à une longueur d'onde de 10,6 µm, et avec une durée d'impulsion de 99 µsecondes.

Le prédécoupage laser 43 étant ici opéré à froid, sur oeuf cru, sa mise en oeuvre est facilitée par rapport à la variante de réalisation décrite en relation avec la figure 3. En outre, en cas de panne éventuelle ou de dysfonctionnement du laser, on a le temps de procéder aux réparations nécessaires, sans urgence, car cette étape de découpe laser 43 n'intervient pas dans une phase du processus global en flux tendu, contrairement à la variante de réalisation de la figure 3.

Au cours d'une étape référencée 44, les oeufs dont la coquille a ainsi été prédécoupée sont ensuite conditionnés en boîtes comprenant une ou plusieurs alvéoles destinées à recevoir chacune un oeuf avec sa coquille. Les caractéristiques de ces boîtes seront décrites plus en détail en relation avec les figures 5A et 5B. Les oeufs sont ainsi bien protégés contre d'éventuels impacts qui pourraient, lors de leur cuisson, provoquer l'éclatement de leur coquille, fragilisée par le prédécoupage laser.

On appose également un opercule sur les boîtes et, à titre optionnel, on peut injecter un gaz dans la boîte avant de sceller l'opercule, de façon à anticiper les phénomènes de gonflement/rétractation de l'emballage lors des phases de montée/descente en température. Un tel gaz peut être de l'oxygène, du dioxyde de carbone ou un mélange O₂/CO₂, permettant, en plus de limiter les déformations de l'opercule, de résorber l'apparition d'un liseré gris entre le jaune et le blanc de l'oeuf, comme décrit précédemment dans ce document.

Au cours d'une étape référencée 45, on procède ensuite à la cuisson des oeufs, directement dans leur emballage. Pour ce faire, les boîtes d'oeufs sont introduites dans une enceinte fermée de type autoclave avec contrôle de pression pendant une durée de 20 à 90 minutes, à une température d'environ 95°C. Cette cuisson réalise également la pasteurisation des oeufs, et élimine les spores éventuelles de la bactérie Clostridium botulinum à la surface de la coquille.

Une étape de prérefroidissement 46 des oeufs durs permet ensuite de quitter rapidement la zone de température comprise entre 95°C et 70°C, afin d'éviter l'apparition permanente du liseré gris. Cette étape de prérefroidissement s'effectue dans le cuiseur.

Une phase 47 de refroidissement plus lente permet ensuite d'abaisser la température des oeufs durs de 70°C à 4°C environ. Un contrôle visuel ou automatisé des emballages est ensuite opéré, afin de détecter et écarter les oeufs qui auraient pu éventuellement se fêler ou éclater à la cuisson. Pour ce faire, les emballages seront de préférence transparents ou translucides.

Si une coquille a éclaté lors de la cuisson 45, il convient alors d'écarter l'emballage pollué de la chaîne de production.

Comme dans la variante de la figure 3, l'étape de refroidissement 47 peut s'accompagner ou être suivie d'une étape 48 de légère congélation de surface des oeufs durs, destinée à faciliter le retrait ultérieur de sa coquille par le consommateur. Pour ce faire, on refroidit l'oeuf en dessous du point de congélation pendant un temps court. Par exemple, on place l'emballage dans une ambiance de froid négatif, de préférence entre - 8 °C et -30°C pendant un temps suffisamment court pour n'opérer qu'une congélation de surface de la coquille et de la membrane coquillière. En effet, un temps de congélation trop long induirait une perte de structure gélifiée du blanc d'oeuf (aspect pelure d'oignon).

Comme déjà exposé précédemment en relation avec le premier mode de réalisation de l'invention, à titre de variante, cette étape 48 de légère congélation de surface des oeufs durs peut se substituer à l'étape de prédécoupage de leur coquille. En effet, sous certaines conditions, une telle congélation de surface peut suffire à elle seule à conférer à l'oeuf des propriétés d'écalabilité suffisantes pour résoudre le problème technique de l'invention.

L'étape référencée 49 est celle du conditionnement final des boîtes d'oeufs durs.

Bien qu'elle n'ait pas été décrite ici, l'étape de marquage des oeufs mentionnée en relation avec la figure 3 peut également être mise en oeuvre dans la variante de réalisation de la figure 4. De même, les conditions de mise en oeuvre de certaines étapes (mise sous atmosphère protectrice, utilisation d'une salle en légère surpression et dont l'air est filtré pour éviter toute pollution microbienne des oeufs...) peuvent également être reproduites dans cette variante.

On notera que les processus de fabrication des oeufs durs décrits ci-avant permettent d'obtenir une date limite de consommation de 30 jours ou plus pour les oeufs destinés au grand public, à la restauration ou aux collectivités.

On présente désormais, en relation avec les figures 5A et 5B, un exemple d'emballage 50 destiné à contenir de tels oeufs durs.

Dans l'exemple de la figure 5A, un tel emballage 50 comprend quatre alvéoles 51 destinées à recevoir chacune un oeuf dur avec sa coquille. On notera, que pour une meilleure visibilité de la constitution de cet emballage 50, l'une de ces quatre alvéoles a été retirée de la figure 5A. Un tel emballage 50 est de préférence réalisé en plastique embouti (emballage thermoformé), qui présente la caractéristique d'être peu onéreux, mais de se déformer assez facilement lors des changements de température. Il pourrait également être réalisé sous forme de plastique injecté dans un moule, serait alors plus onéreux, mais se déformerait moins (résistance physique de l'emballage) aux températures élevées, notamment au-delà de 100°C.

L'emballage 50 peut être obturé à l'aide d'un couvercle 52, qui vient se "clipser" sur la boîte contenant les oeufs. L'emballage 50 est de préférence transparent ou translucide. Un suremballage en carton 53 peut constituer une protection supplémentaire.

Un tel emballage 50 est conçu de façon à améliorer les échanges thermiques lors des phases de cuisson et de refroidissement des oeufs. Pour ce faire, ainsi qu'illustré en figure 5B qui représente une vue en coupe de deux alvéoles 51 contenant chacune un oeuf, la forme et la taille des alvéoles 51 sont choisies de façon à ce que:
- les oeufs 54, 55 reposent pointe en bas dans les alvéoles ;
- chaque oeuf 54, 55 repose bien au fond de l'alvéole 51, ce qui nécessite que l'alvéole intérieure soit suffisamment large par rapport au calibre de la coquille del'oeuf. En d'autres termes, la distance séparant la pointe de la coquille de l'oeuf du fond de l'alvéole 51 doit être aussi faible que possible ;
- la hauteur des alvéoles 51 doit également être choisie de façon à ce que l'espace libre entre le haut de la coquille de l'oeuf 54, 55 et le couvercle 52 soit aussi faible que possible ;
- l'espace 56 entre deux oeufs voisins est également réduit à son minimum.

Cette forme d'emballage est donnée à titre d'exemple, et toute autre forme d'emballage permettant d'améliorer les échanges thermiques peut également être utilisée dans le cadre de l'invention. De telles contraintes sur les échanges thermiques s'appliquent dans le cadre de la variante de réalisation de la figure 4 mais ne sont pas aussi fortes dans le mode de réalisation de la figure 3.

Par ailleurs, on notera que, selon l'invention, un tel emballage peut contenir d'autres ingrédients, en plus d'un ou plusieurs oeufs durs : par exemple, un tel emballage peut contenir une salade composée, dont l'oeuf dur dans sa coquille constitue l'un des ingrédients.

On notera également que les températures et les durées des différentes étapes du procédé de l'invention ont été données, dans l'ensemble du document, et sauf indication contraire, pour un oeuf dur seul, de calibre 62g. Il est bien sûr évident que dans le cas d'un oeuf d'autre calibre, ou conditionné dans un emballage, ces valeurs numériques doivent être adaptées, en fonction du calibre de l'oeuf considéré, ou des caractéristiques de l'emballage.

Enfin, dans l'ensemble de ce document, l'invention a été présentée dans le cas particulier des oeufs de poule. Il est bien sûr évident qu'elle s'applique dans son principe, moyennant adaptation des valeurs numériques de température et de durée des différentes étapes du procédé de l'invention, à tout autre type d'oeuf, et notamment, mais non exclusivement, aux oeufs de canes, d'oies, de dindes, de cailles ou d'autruches.

## Revendications

1. Oeuf dur (10) présentant un prédécoupage de forme prédéfinie (13, 14 ; 20, 21, 22) sur sa coquille, configuré de façon à permettre un retrait facilité de ladite coquille, ledit oeuf dur étant conditionné avec sa coquille dans un emballage.

2. Oeuf dur selon la revendication 1, **caractérisé en ce que** ledit prédécoupage définit un cercle (13) ou une spirale (14) sensiblement au niveau de l'équateur dudit oeuf (10).

3. Oeuf dur selon l'une quelconque des revendications 1 et 2, **caractérisé en ce que** ledit prédécoupage (13, 14) est réalisé de façon à ce que la coquille s'ouvre lorsqu'on dévisse (12) l'oeuf (10) de sensiblement un quart de tour.

4. Procédé de fabrication d'un oeuf dur (10), comprenant des étapes de cuisson (33, 45) dudit oeuf et de prédécoupage (341 ; 43) de la coquille dudit oeuf,
**caractérisé en ce que** ledit prédécoupage forme un prédécoupage prédéfini permettant un retrait aisé de ladite coquille, **et en ce qu'**il comprend une étape de conditionnement (343, 37 ; 44, 49) dudit oeuf avec sa coquille dans un emballage.

5. Procédé selon la revendication 4, **caractérisé en ce qu'**il comprend une étape de préfrefroidissement (342 ; 46) rapide dudit oeuf après cuisson à une température d'environ 70°C.

6. Procédé selon l'une quelconque des revendications 4 et 5, **caractérisé en ce qu'**il comprend une étape de légère congélation (36 ; 48) de surface dudit oeuf, après cuisson.

7. Procédé selon l'une quelconque des revendications 4 à 6, **caractérisé en ce que** ladite étape de conditionnement (44) est effectuée avant ladite étape de cuisson (45), et **en ce qu'**il comprend une étape de cuisson et de pasteurisation dudit oeuf à l'intérieur dudit emballage (50).

8. Procédé selon la revendication 7, **caractérisé en ce que** ladite étape de prédécoupage (43) est effectuée avant ladite étape de cuisson (45).

9. Procédé selon l'une quelconque des revendications 4 à 6, **caractérisé en ce que** ladite étape de prédécoupage (341) est effectuée après ladite étape de cuisson (33).

## Patentansprüche

1. Hartes Ei (10), das eine Vorschnittlinie mit vordefinierter Form (13, 14; 20, 21, 22) auf seiner Schale aufweist, die dazu vorgesehen ist, ein leichteres Entfernen der Schale zu ermöglichen, wobei das harte Ei mit seiner Schale in einer Verpackung verpackt ist.

2. Hartes Ei nach Anspruch 1, **dadurch gekennzeichnet, dass** die Vorschnittlinie einen Kreis (13) oder eine Spirale (14) im Wesentlichen im Bereich der Mitte des Eis (10) definiert.

3. Hartes Ei nach einem der Ansprüche 1 und 2, **dadurch gekennzeichnet, dass** die Vorschnittlinie (13, 14) derart ausgeführt ist, dass sich die Schale öffnet, wenn das Ei (10) im Wesentlichen um eine Vierteldrehung gedreht (12) wird.

4. Verfahren zur Herstellung eines harten Eis (10), umfassend Schritte des Kochens (33, 45) des Eis und des Vorschneidens (341; 43) der Schale des Eis,
**dadurch gekennzeichnet, dass** das Vorschneiden eine vordefinierte Vorschnittlinie bildet, die ein leichtes Entfernen der Schale ermöglicht, und dass es einen Schritt der Verpackung (343, 37; 44, 49) des Eis mit seiner Schale in einer Verpackung umfasst.

5. Verfahren nach Anspruch 4, **dadurch gekennzeichnet, dass** es einen Schritt des schnellen Vorabkühlens (342; 46) des Eis nach dem Kochen auf eine Temperatur von ungefähr 70°C umfasst.

6. Verfahren nach einem der Ansprüche 4 und 5, **dadurch gekennzeichnet, dass** es einen Schritt eines leichten Gefrierens (36; 48) der Oberfläche des Eis nach dem Kochen umfasst.

7. Verfahren nach einem der Ansprüche 4 bis 6, **dadurch gekennzeichnet, dass** der Verpackungsschritt (44) vor dem Kochschritt (45) erfolgt, und dass er einen Schritt des Kochens und Pasteurisierens des Eis im Inneren der Verpackung (50) umfasst.

8. Verfahren nach Anspruch 7, **dadurch gekennzeichnet, dass** der Schritt des Vorschneidens (43) vor dem Kochschritt (45) erfolgt.

9. Verfahren nach einem der Ansprüche 4 bis 6, **dadurch gekennzeichnet, dass** der Schritt des Vorschneidens (341) nach dem Kochschritt (33) erfolgt.

## Claims

1. Hard-boiled egg (10) having a presplit with a predetermined shape (13, 14; 20, 21, 22) on the shell thereof, arranged in such a way as to allow the said shell to be removed more easily, the said hard-boiled egg being packaged with its shell in a packaging.

2. Hard-boiled egg according to Claim 1, **characterised in that** the said presplit defines a circle (13) or a spiral (14) substantially at the equator of the said egg (10).

3. Hard-boiled egg according to either one of Claims 1 and 2, **characterised in that** the said presplit (13, 14) is arranged in such a way that the shell opens when the egg (10) is unscrewed (12) by substantially a quarter turn.

4. Method for manufacturing a hard-boiled egg (10), comprising the steps of boiling (33, 45) the said egg and of presplitting (341; 43) the shell of the said egg, **characterised in that** the said presplitting forms a predetermined presplit allowing the said shell to be removed easily, **and in that** it comprises a step of packaging (343, 37; 44, 49) the said egg with its shell in a packaging.

5. Method according to Claim 4, **characterised in that** it comprises a step of rapidly precooling (342; 46) the said egg after boiling to a temperature of approximately 70 °C.

6. Method according to either one of Claims 4 and 5, **characterised in that** it comprises a step of slightly freezing (36; 48) the surface of the said egg, after boiling.

7. Method according to any one of Claims 4 to 6, **characterised in that** the said packaging step (44) is performed before the said boiling step (45), and **in that** it comprises a step of boiling and of pasteurizing the said egg inside the said packaging (50).

8. Method according to Claim 7, **characterised in that** the said presplitting step (43) is performed before the said boiling step (45).

9. Method according to any one of Claims 4 to 6, **characterised in that** the said presplitting step (341) is performed after the said boiling step (33).
